# EUROPÄISCHE PATENTANMELDUNG

(11) **EP 1 067 490 A1**
(43) Veröffentlichungstag der Anmeldung: **10.01.2001**
(21) Anmeldenummer: 00250191.4
(22) Anmeldetag: 21.06.2000
(51) Int. Cl.: G07F 17/16, G09B 29/10, A47F 7/14

(54) **Informationssystem für gedruckte Stadtinformation und Dispenser**

(30) Priorität: 06.07.1999 DE 29912044 U
(71) Anmelder: Layon Werbedesign & kommunkation GmbH, 10119 Berlin (DE)
(72) Erfinder: Redmer, Silke, 10437 Berlin (BE)
(74) Vertreter: Hengelhaupt, Jürgen, Dipl.-Ing.

(57) **Zusammenfassung**

Die Erfindung beschreibt ein Informationssystem für gedruckte Stadtinformationen und einen zu deren Aufbewahrung und Ausgabe geeigneten Dispenser.

Das Informationssystem für die gedruckten Stadtinformationen, basiert auf Informationskärtchen in einem gegebenenfalls nach ein- oder mehrfacher Faltung einheitlichen Format in etwa Visitenkartengröße.

Der Dispenser ist dadurch gekennzeichnet, daß er als ein reihen- und spaltenweise mit vorne mit einer Begrenzung versehenen Fächern zur Aufnahme von Informationskärtchen in etwa Visitenkartenformat und einer Informationsfläche zur Aufnahme einer Legende für eine thematische Kodierung der Informationskärtchen versehener Kasten ausgebildet ist.

## Beschreibung

Die Erfindung betrifft ein Informationssystem für gedruckte Stadtinformationen und einen zu deren Aufbewahrung und Ausgabe geeigneten Dispenser.

Gedruckte Informationen über Sehenswürdigkeiten, Museen und Ausstellungen, gastronomische Angebote u. ä. werden im allgemeinen als Informationsblätter in nicht genormten Formaten ausgegeben. Ihre Größe bewegt sich dabei etwa zwischen dem Normformat DIN A5 und einem Drittel von DIN A5, wobei jeder Werbende für sich ein individuelles Format wählt. So liegen in Hotelhallen Geschäfts- und Veranstaltungsgebäuden usw. meist sehr verschiedenformatige, mehr oder weniger große Einzelblätter sowie Faltblätter aus.

Die Informationsblätter sind zwar geeignet, eine Fülle von Informationen zu vermitteln, die über reine Hinweisinformationen oftmals weit hinausgehen, sie erweisen sich hinsichtlich ihrer Aufbewahrungsmöglichkeit jedoch als ziemlich unpraktisch. Entnimmt ein Besucher mehrere ihn interessierende Informationsblätter, so ist ein solcher Stapel für die Mitnahme in der Jackentasche schnell zu groß und zu unhandlich, wobei sich die möglicherweise verschiedenen Formate zusätzlich als hinderlich erweisen. Bei sommerlicher Kleidung fehlt den Besuchern oft gänzlich eine Aufbewahrungsmöglichkeit, so daß die Informationsblätter nur in der Hand getragen werden können. Nicht selten landen diese eben wegen dieser Unhandlichkeit im nächsten Papierkorb.

Die Präsentation der Informationsblätter, die auf Tischen oder in Regalen ausliegen, ist zumeist wenig ansprechend und für einen Besucher auf jeden Fall verwirrend. Um an eine gewünschte Information zu kommen, muß ein Besucher alle vorhandenen Informationsblätter durchsehen, was oft einen nicht geringen und unnötigen Aufwand für Besucher erfordert, deren Zeit eng begrenzt ist.

Der Erfindung liegt deshalb die Aufgabe zugrunde, ein Informationssystem und einen zur Ausgabe der Information geeigneten Dispenser anzugeben, die handlich und praktisch sind. Die gedruckten Informationen sollen sich zur bequemen Aufbewahrung eignen.

Erfindungsgemäß wird die Aufgabe gelöst durch die Merkmale der Ansprüche 1 und in Verbindung mit dem jeweiligen Oberbegriff. Zweckmäßige Ausgestaltungen sind Gegenstand der Unteransprüche.

Dadurch, daß die Informationen im Visitenkartenformat vorliegen, sind für einen Besucher die wichtigsten Informationen und Daten auf einen Blick erfaßbar. Werden beide Seiten der Kärtchen genutzt, was in aller Regel der Fall sein wird, so steht trotz des kleinen Formates bereits ein genügender Platz zur Verfügung, um die Informationskärtchen mit einem Bild, mit Verkehrsinformationen, Telefonnummern und anderen wichtigen Informationen zu versehen, gegebenenfalls auch zweisprachig. Darüber hinaus kann ein Informationskärtchen in Form einer Klappkarte, als Faltkarte oder Leporello gestaltet sein, so daß auch größere Informationsmengen Platz finden, so z. B. eine Verkehrs- oder Straßenkarte.

Durch die einheitliche Größe in einem handlichen Format stellen die Informationskärtchen ein 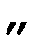 Sammelobjekt" dar, das sich zunächst leicht in Hosen-, Jacken- oder Handtaschen aufbewahren läßt, nicht vorzeitig weggeworfen wird und sich später für eine bequeme und wenig platzaufwendige, dauerhafte Aufbewahrung eignet.

Die Präsentation und Ausgabe erfolgt in einem Dispenser, in dem die Informationskärtchen anhand einer Farbkodierung nach Ressorts geordnet angeboten werden. Der Dispenser ist nach Art eines Setzkastens gestaltet. Seine Fächer sind vorn mit einer Begrenzung versehen, so daß die Informationskärtchen hochformatig eingestellt werden können. Die Begrenzung ist gegebenenfalls unten zur Rückfront des Dispensers hin zurückgesetzt, so daß sich die schräg eingestellten Informationskärtchen ganz an die Begrenzung anlehnen. Auf einem Bereich auf der Vorderfläche des Dispensers, z. B. randseitig, befindet sich die Legende für die Farbkodierung.

Die Dispenser werden zweckmäßig aus Holz oder einem anderen, ähnlich geeigneten Material, z. B. Metall oder Kunststoff, beispielsweise Plexiglas, gefertigt.

Die Erfindung soll anhand eines Ausführungsbeispiels näher erläutert werden. Die zugehörige Zeichnung zeigt einen Disperserkasten für die Informationskärtchen.

Der Dispenserkasten ist in 72 Fächer 1 geteilt, in die die Informationskärtchen eingestellt werden. Vorn werden die Fächer 1 durch dünne Metallstreben 2 begrenzt, so daß die Informationskärtchen im Hochformat eingestellt werden können und dann auf den Querleisten 3 stehen, wobei sie sich vorn an die oberen der jeweils beiden Metallstreben 2 anlehnen. Die unteren Metallstreben 2 verhindern ein eventuelles Durchrutschen der Kärtchen. Da die Informationskärtchen auch im Hochformat bedruckt sind, kann ihr Informationsinhalt bequem erfaßt werden, ohne daß das entsprechende Kärtchen bereits aus dem Dispenserkasten entnommen werden muß. Eine Orientierung für die Thematik der Kärtchen gibt eine Legende am linksseitigen Rand des Dispenserkastens. Beispielsweise kann jeder Fächerreihe eine Farbkodierung zugeordnet sein, z. B. für die Bereiche Sehenswürdigkeiten, Theater, Museen, Gastronomie usw. Die Informationskärtchen haben an einer bestimmten, gleichbleibenden Stelle eine entsprechende Farbkodierung, gegebenenfalls eine Untergrundfarbe für die Titelüberschrift oder den Ort, den Stadtbezirk o ä. Die Farblegende ist im gezeigten Ausführungsbeispiel auf eine Blende 4 aufgebracht. Die Blende 4 läßt sich auf klappen, um so dahinter z. B. weitere Informationskärtchen in Reserve zu halten.

Die Dispenserkästen sind mit einer Möglichkeit zur Aufhängung an der Wand versehen, können aber auch auf einen speziellen Ständer gestellt werden. Durch ihre flache Gestalt lassen sie sich platzsparend anbringen und bilden einen optischen Blickfang. Sie lassen sich in Flughäfen, Hotels, Ausflugspunkten, Ausflugsschiffen, Touristeninformationen, gastronomischen Einrichtungen und anderen stark frequentierten Standorten plazieren. Die Informationskärtchen werden so zentral und gebündelt aufbewahrt und als ein Gesamtsystem von Stadtinformationen angeboten. Ein Vorteil ist, daß bei Entnahme einzelner Kärtchen diese nicht vermischt und damit in Unordnung gebracht werden können.

Die Informationskärtchen können von öffentlichen oder privaten Werbenden über einen zentralen Anbieter bereitgestellt werden, der auch die regelmäßige Befüllung und Pflege der Dispenserkästen übernimmt.

### Bezugszeichenliste

- 1: Fächer
- 2: Metallstreben
- 3: Querleisten
- 4: Blende

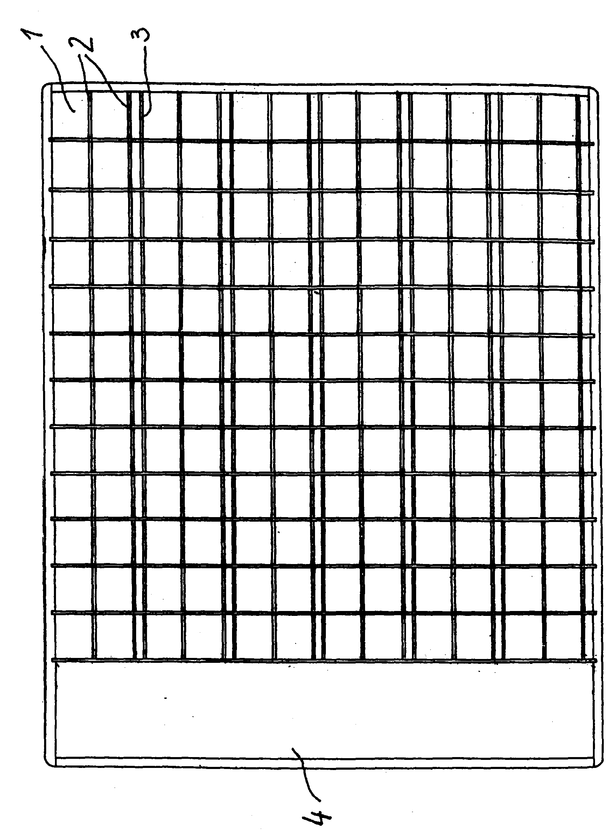

## Patentansprüche

1. Informationssystem für gedruckte Stadtinformationen,
**gekennzeichnet** durch
Informationskärtchen in einem gegebenenfalls nach ein- oder mehrfacher Faltung einheitlichen Format in etwa Visitenkartengröße.

2. Informationssystem nach Anspruch 1,
**gekennzeichnet** dadurch, daß
die Informationskärtchen eine Farbkodierung für eine thematische Klassierung aufweisen.

3. Informationssystem nach Anspruch 1 oder 2,
**gekennzeichnet** dadurch, daß
die Informationskärtchen beidseitig bedruckt sind.

4. Dispenser für gedruckte Stadtinformationen,
**gekennzeichnet** dadurch, daß
er als ein reihen- und spaltenweise mit vorne mit einer Begrenzung versehenen Fächern (1) zur Aufnahme von Informationskärtchen in etwa Visitenkartenformat und einer Informationsfläche (4) zur Aufnahme einer Legende für eine thematische Kodierung der Informationskärtchen versehener Kasten ausgebildet ist.

5. Dispenser nach Anspruch 4,
gekennzeichnet dadurch, daß
er aus Holz gefertigt ist.

6. Dispenser nach Anspruch 4,
gekennzeichnet dadurch, daß
er aus Kunststoffmaterial gefertigt ist.

7. Dispenser nach Anspruch 6,
gekennzeichnet dadurch, daß
er aus Plexiglas gefertigt ist.

8. Dispenser nach Anspruch 4,
gekennzeichnet dadurch, daß
er aus Metall gefertigt ist.

9. Dispenser nach einem der Ansprüche 4 bis 8,
gekennzeichnet dadurch, daß
zur Begrenzung der Fächer (1) zwei voneinander beabstandete Metallstreben (2) vorgesehen sind.

10. Dispenser nach einem der Ansprüche 4 bis 9,
gekennzeichnet dadurch, daß
die Begrenzung der Fächer (1) unten zur Rückfront des Kastens hin zurückgesetzt ist.

11. Dispenser nach einem der Ansprüche 4 bis 10,
dadurch gekennzeichnet,
daß er Mittel zu seiner Befestigung an einer Wand aufweist.

12. Dispenser nach einem der Ansprüche 4 bis 10,
dadurch gekennzeichnet,
daß er mit einem speziellen Ständer verbunden ist.
